# EUROPEAN PATENT SPECIFICATION

(11) **EP 1 339 281 B1**
(45) Date of publication and mention of the grant of the patent: **11.08.2004**
(21) Application number: 01985335.7
(22) Date of filing: 23.11.2001
(51) Int. Cl.: A01N 25/02

(54) **OIL-IN-WATER EMULSION FORMULATION OF INSECTICIDES**
INSEKTIZIDE ÖL IN WASSER EMULSIONEN
FORMULATION D'EMULSION HUILE DANS L'EAU D'INSECTICIDES

(30) Priority: 01.12.2000 EP 00126276
(43) Date of publication of application: 03.09.2003
(73) Proprietor: Bayer CropScience S.A., 69009 Lyon (FR)
(72) Inventor: TARANTA, Claude, 65760 Eschborn (DE); MANSOUR, Peter, 65203 Wiesbaden (DE); BOURGOGNE, Michel, 69005 Lyon (FR); HENRIET, Michel, 40764 Langenfeld (DE)
(74) Representative: Rippel, Hans Christoph, Dr.
(86) International application number: PCT/EP2001/013658
(87) International publication number: WO 2002/043488

(56) References cited:
- EP-A- 1 025 757
- WO-A-90/09103
- WO-A-96/01047

## Description

The invention relates to liquid formulations of insecticides, in particular pyrethroids, in the form of oil-in-water (EW) emulsions, to a process for the production of such EW formulations and to their use for pest control.

Due to the enormous damage that is caused by pests on crops, woods, textiles and so on and due to their role in causing and transmitting diseases of human beings, animals and crops, the use of chemical pesticides is still unavoidable.

Insecticides play an important role in integrated pest control, and they are essential in guaranteeing acceptable yields of harvests all over the world.

Pyrethroids (natural and synthetic ones) in particular are an important class of lipophilic pesticides. Their arthropodicidal properties are based on a strong influence on the sodium channels in the nerve membranes of the arthropods.

The use of liquid formulations for spray applications is a convenient tool for the end-user to protect their crops against pests. Liquid products are easily dosed prior to incorporation into water and are readily dispersed and diluted upon addition in the spray tank.

This applies particularly to liquid insecticidal formulations, especialy to liquid formulations containing one or more pyrethroid as active substances.

The customary liquid insecticide and in particular pyrethroid formulations are emulsifiable concentrates (EC) which are usually based on aromatic hydrocarbon solvents such as xylene and the like.

In WO-A 90/09 103 oil-in-water emulsion formulations of pyrethroids are disclosed.

In such formulations part of the organic solvent is substituted by water in order to provide a more environmental friendly product.

EW's are also advantageous for the end-user, because unlike EC's, EW-formulations are already emulsions before the preparation of the actually applied spray mixture and, thus, can be easily diluted. It will be readily appreciated that the technical problems associated with producing stable EW-formulations are quite different and more complex than those encountered in the production of EC's.

Although the known EW formulations of pyrethroids already show very favourable properties, there is still room for improvement, e.g. for the toxicological profile of such formulations.

It has now surprisingly been found that stable EW-formulations, containing an insecticide, in particular a pyrethroid, of significantly reduced toxicity can be prepared, based on carboxylic acid esters as organic solvent.

Unlike the formulations disclosed in WO-A 90/09103 the formulations according to the invention do not need aromatic hydrocarbons as a solvent or cosolvent.

EP-A 0 567 368 discloses EC's containing pyrethroids, in which aromatic hydrocarbons have been replaced by a combination of one or more biphenyl derivatives, a polar co-solvent and a vegetable oil, to achieve an improved inhalation tolerance. WO-A 96/01047 discloses pyrethroid containing EC's with an improved eye tolerance containing vegetable oils or other esters as an organic solvent. However, these documents are completely silent on EW-formulations.

Accordingly, in one aspect of the invention there is provided an oil-in-water emulsion, comprising
a) one or more insecticides, in particular pyrethroids;
b) one or more solvents from the group of esters of aliphatic monocarboxylic acids, esters of aliphatic dicarboxylic acids, esters of aromatic monocarboxylic acids esters of aromatic dicarboxylic acids and tri-n-alkylphosphates;
c) an emulsifier system comprising one or more anionic surfactants and two or more non ionic surfactants, one of which has a HLB value between 4 and 12 and one of which has a HLB value between 12 and 20;
d) one or more film forming agents/thickeners; and
e) water.

EW's according to the invention show a remarkably reduced acute toxicity profile; in many cases they are non classified in terms of acute oral toxicity. This means, inter alia, that the acute oral LD 50 on rats is higher than 2000 mg/kg body weight and that the formulation is non irritant for both skin and eyes.

At the same time the formulations show excellent bioefficacy and all further advantages customary to EW's, like user friendliness and a reduced content of aromatic solvents.

The term EW formulation means the undiluted formulation.

The formulations according to the invention comprise one or more, preferably 1 or 2, in particular 1, insecticides, preferably from the group of the natural or synthetic pyrethroids.

Suitable examples of insecticides are e.g.:
1. from the group of the phosphorus compounds
   acephate, azamethiphos, azinphos-ethyl, azinphos-methyl, bromophos, bromophos-ethyl, cadusafos (F-67825), chlorethoxyphos, chlorfenvinphos, chlormephos, chlorpyrifos, chlorpyrifos-methyl, demeton, demeton-S-methyl, demeton-S-methyl sulfone, dialifos, diazinon, dichlorvos, dicrotophos, dimethoate, disulfoton, EPN, ethion, ethoprophos, etrimfos, famphur, fenamiphos, fenitriothion, fensulfothion, fenthion, fonofos, formothion, fosthiazate (ASC-66824) heptenophos, isazophos, isothioate, isoxathion, malathion, methacrifos, methamidophos, methidathion, salithion, mevinphos, monocrotophos, naled, omethoate, oxydemeton-methyl, parathion, parathion-methyl, phenthoate, phorate, phosalone, phosfolan, phosphocarb (BAS-301), phosmet, phosphamidon, phoxim, pirimiphos, primiphos-ethyl, pirimiphos-methyl, profenofos, propaphos, proetamphos, prothiofos, pyraclofos, pyridapenthion, quinalphos, sulprofos, temephos, terbufos, tebupirimfos, tetrachlorvinphos, thiometon, triazophos, trichlorphon, vamidothion;
2. from the group of the carbamates
   alanycarb (OK-135), aldicarb, 2-sec-butyl phenylmethyl carbamate (BPMC), carbaryl, carbofuran, carbosulfan, cloethocarb, benfuracarb, ethiofencarb, furathiocarb, HCN-801, isoprocarb, methomyl, 5-methyl m-cumenylbutyryl(methyl)carbamate, oxamyl, pirimicarb, propoxur, thiodicarb, thiofanox, 1-methylthio(ethylideneamino)-N-methyl-N-(morpholinothio)carbamate (UC 51717), triazamate;
3. from the group of the pyrethroids
   acrinathrin, allethrin, alphametrin, 5-benzyl-3-furylmethyl (E)-, (1R)-cis-2,2-di-methyl-3-(2-oxothiolan-3-ylidenemethyl)cyclopropanecarboxylate, beta-cyfluthrin, beta-cypermethrin, bioallethrin, bioallethrin ((S)-cyclopentyl isomer), bioresmethrin, bifenthrin, (RS)-1-cyano-1-(6-phenoxy-2-pyridyl)methyl (1 RS)-trans-3-(4-tert-butylphenyl)-2,2-dimethylcyclopropanecarboxylate (NCI 85193), cycloprothrin, cyfluthrin, cyhalothrin, cythithrin, cypermethrin, cyphenothrin, deltamethrin, empenthrin, esfenvalerate, fenfluthrin, fenpropathrin, fenvalerate, flucythrinate, flumethrin, fluvalinate (D isomer), imiprothrin (S-41311), lambda-cyhalothrin, permethrin, phenothrin ((R) isomer), praftethrin, pyrethrins (natural products), resmethrin, tefluthrin, tetramethrin, theta-cypermethrin (TD-2344), tralomethrin, transfluthrin, zeta-cypermethrin (F-56701);
4. from the group of the amidines
   amitraz, chlorodimeform;
5. from the group of the tin compounds
   cyhexatin, fenbutatin oxide;
6. others
   abamectin, ABG-9008, acetamiprid, Anagrapha falcitera, AKD-1022, AKD-3059, ANS-118, Bacillus thuringiensis, Beauveria bassiana, bensultap, bifenazate (D-2341), binapacryl, BJL-932, bromopropylate, BTG-504, BTG-505, buprofezin, camphechlor, cartap, chlorbenzilate, chlorfenapyr, chlorfluazuron, 2-(4-chlorophenyl)-4,5-diphenylthiophene (UBI-T 930), chlorfentezine, chromafenozide (ANS-118), CG-216, CG-217, CG-234, A-184699, (2-naphthylmethyl)cyclopropanecarboxylate (Ro12-0470), cyromazin, diacloden (thiamethoxam), diafenthiuron, ethyl N-(3,5-dichloro-4-(1,1,2,3,3,3-hexafluoro-1-propyloxy)phenyl)carbamoyl)-2-chlorobenzocarboximidate, DDT, dicofol, diflubenzuron, N-(2,3-dihydro-3-methyl-1,3-thiazol-2-ylidene)-2,4-xylidine, dinobuton, dinocap, diofenolan, DPX-062, emamectin benzoate (MK-244), endosulfan, ethiprole (sulfethiprole), ethofenprox, etoxazole (YI-5301), fenazaquin, fenoxycarb, fipronil, fluazuron, flumite (Flufenzine, SZI-121), 2-fluoro-5-(4-(4-ethoxyphenyl)-4-methyl-1-pentyl)diphenyl ether (MTI 800), granulosis and nuclear polyhedrosis viruses, fenpyroximate, fenthiocarb, flubenzimine, flucycloxuron, flufenoxuron, flufenprox (ICI-A5683), fluproxyfen, gamma-HCH, halofenozide (RH-0345), halofenprox (MTI-732), hexaflumuron (DE_473), hexythiazox, HOI-9004, hydramethylnon (AC 217300), lufenuron, imidacloprid, indoxacarb (DPX-MP062), kanemite (AKD-2023), M-020, MTI-446, ivermectin, M-020, methoxyfenozide (intrepid, RH-2485), milbemectin, NC-196, neemgard, nitenpyram (TI-304), 2-nitromethyl-4,5-dihydro-6H-thiazine (DS 52618), 2-nitromethyl-3,4-dihydrothiazole (SD 35651), 2-nitromethylene-1,2-thiazinan-3-ylcarbamaldehyde (WL 108477), pyriproxyfen (S-71639), NC-196, NC-1111, NNI-9768, novaluron (MCW-275), OK-9701, OK-9601, OK-9602, propargite, pymethrozine, pyridaben, pyrimidifen (SU-8801), RH-0345, RH-2485, RYI-210, S-1283, S-1833, SB7242, SI-8601, silafluofen, silomadine (CG-177), spinosad, SU-9118, tebufenozide, tebufenpyrad (MK-239), teflubenzuron, tetradifon, tetrasul, thiacloprid, thiocyclam, TI-435, totfenpyrad (OMI-88), triazamate (RH-7988), triflumuron, verbutin, vertalec (Mykotal), YI-5301.

A preferred group of insecticides are natural or synthetic pyrethroids, e.g.:
acrinathrin, allethrin, alphametrin, 5-benzyl-3-furylmethyl (E)- (1R)-cis-2,2-dimethyl-3-(2-oxothiolan-3-ylidenemethyl)cyclopropanecarboxylate, beta-cyfluthrin, beta-cypermethrin, bioallethrin, bioallethrin ((S)-cyclopentylisomer), bioresmethrin, bifenthrin, (RS)-1-cyano-1-(6-phenoxy-2-pyridyl)methyl (1RS)-trans-3-(4-tert-butylphenyl)-2,2-dimethylcyclopropanecarboxylate (NCI 85193), cycloprothrin, cyfluthrin, cyhalothrin, cythithrin, cypermethrin, cyphenothrin, deltamethrin, empenthrin, esfenvalerate, fenfluthrin, fenpropathrin, fenvalerate, flucythrinate, flumethrin, fluvalinate (D isomer), imiprothrin (S-41311), lambda-cyhalothrin, permethrin, phenothrin ((R) isomer), prallethrin, pyrethrins (natural products), resmethrin, tefluthrin, tetramethrin, theta-Cypermethrin (TD-2344), tralomethrin, transfluthrin and zeta-cypermethrin (F-56701).

Preferred are acrinathrin, bioallethrin, (S)-bioallethrin and deltamethrin. Especially preferred are acrinathrin and/or deltamethrin, deltamethrin being particularly preferred.

It is also preferred to use a mixture of one or more pyrethroids and one or more non-pyrethroid insecticides such as fiproles, nitromethylenes, carbamates.

Of the non-pyrethroid insecticides fiproles, acetamiprid and pirimicarb are especially preferred.

The concentration of the active substance(s) is generally 0.05 to 200 g/l, preferably 0.1 to 50 g/l, in particular 1 to 25 g/l.

The pyrethroids and other insecticides referred to are well known and usually commercially available. They are described, e.g., in The Pesticide Manual, 11^{th} ed., British Crop Protection Council, Farnham 1997.

The ester used as an organic solvent is from the group of esters of aliphatic monocarboxylic acids, esters of aliphatic di- or tricarboxylic acids, esters of aromatic monocarboxylic acids, esters of aromatic di- or tricarboxylic acids and tri-n-alkylphosphates, preferably tri-n-(C₁-C₆)alkylphosphates, such as tri-n-butylphosphate.

Preferably it is from the group of esters of aliphatic monocarboxylic acids, esters of aliphatic di- or tricarboxylic acids and esters of aromatic monocarboxylic acids.

Examples of aliphatic monocarboxylic esters are aliphatic (such as methyl, ethyl, n-propyl, isopropyl, n-butyl, isobutyl, n-pentyl, isopentyl, neopentyl, n-hexyl, isohexyl, n-heptyl, isoheptyl, n-octyl, ethylhexyl, n-nonyl and isononyl) and aromatic (such as benzyl) esters of fatty acids, such as acetic acid (such as ethyl acetate and n-butyl acetate), caproic acid, caprylic acid, capric acid, a mixture of caprylic and capric acids, lauric acid, myristic acid, a mixture of lauric and myristic acids, palmitic acid, stearic acid, a mixture of palmitic and stearic acids, myristoleic acid, palmitoleic acid, oleic acid, linoleic acid or linolenic acid, or carboxylic acids with further functional groups, such as lactic acid (such as ethyl lactate, butyl lactate, ethylhexyl lactate or 1-methoxy-2-propyl acetate).

A preferred group of aliphatic monocarboxylic acid esters are vegetable and animal oils. The term vegetable oil as used herein includes oils from oil producing plants, such as rape oil, soya oil, palm oil, sunflower oil, cotton oil, maize oil, linseed oil, coconut oil, thistle oil or castor oil. The term animal oil as used herein includes oils from oil producing animals, such as tallow oil. Other examples of monocarboxylic acid esters are the transesterification products of these oils such as alkyl esters, like rapeseed oil methyl ester, such as Radia 7961 (Fina Chemicals, Belgium), or rapeseed oil ethyl ester.

Vegetable oils are preferably esters of C₁₀-C₂₂, preferably C₁₂-C₂₀, fatty acids. Those C₁₀-C₂₂ fatty acid esters are, by way of example, esters of unsaturated or saturated C₁₀-C₂₂ fatty acids, especially with an even number of carbon atoms, e.g. cis-erucic acid, iso-erucic acid, lauric acid, palmitic acid, myristic acid, particularly C₁₈-fatty acids, like stearic acid, linoleic acid or linolenic acid.

Examples of C₁₀-C₂₂ fatty acid esters are esters, which are obtainable by reacting glycerol or glycol with C₁₀-C₂₂ fatty acids, and which are contained, e.g., in oils from oil producing plants, as well as (C₁-C₂₀)-alkyl (C₁₀-C₂₂)-fatty acid esters which can be obtained, e.g., by transesterification of said glycerol- or glycol C₁₀-C₂₂ fatty acid esters with C₁-C₂₀ alcohols (such as methanol, ethanol, propanol or butanol). The transesterification can be achieved according to processes well known in the art, which are described, e.g., in Römps Chemie Lexikon, 9^{th} edition, Volume 2, page 1343, Thieme Verlag, Stuttgart.

Preferred as C₁-C₂₀-alkyl C₁₀-C₂₂ fatty acid esters are methyl esters, ethyl esters, n-propyi-esters, isopropyl esters, n-butyl-esters, isobutyl esters, n-pentyl esters, isopentyl esters, neopentyl esters, n-hexyl esters, isohexyl esters, n-heptyl esters, isoheptyl esters, n-octyl esters, 2-ethyl-hexyl esters, n-nonyl esters, isononyl esters, and dodecyl esters. As glycerol and glycol C₁₀-C₂₂ fatty acid esters the uniform or mixed glycerol or glycol esters of C₁₀-C₂₂ fatty acids are preferred, particularly of fatty acids with an even number of carbon atoms, such as cis-erucic, iso-erucic acid, lauric acid, palmitic acid, myristic acid, particularly C₁₈-fatty acid, like stearic acid, linoleic acid or linolenic acid.

The EW formulations according to the invention may contain vegetable oils in the form of commercially available oily formulation auxiliaries, e.g. based on rape oil, like Hasten® (Victorian Chemical Company, Australia, main component rape oil ethyl ester), Actirob® B (Novance, France, main component rape oil methyl ester), Rako-Binol® (Bayer AG, Germany, main component rape oil), Renol® (Stefes, Germany, main component rape oil methyl ester) or Stefes Mero® (Stefes, Germany, main component rape oil methyl ester).

Examples of esters of aromatic monocarboxylic acids include esters of benzoic acid (such as n-butyl benzoate, benzyl benzoate, decyl benzoate, dodecyl benzoate, hexyl benzoate, isostearyl benzoate, methyl benzoate, octadecyl benzoate, C₁₂-C₁₅ alkyl benzoate) or salicylic acid.

Examples of aliphatic di- or tricarboxylic acid esters include esters of maleic acid (methyl, ethyl), diesters or triesters derivatives of adipic acid (such as diisopropyl adipate (such as Crodamol® DA (Croda Oleochemicals, UK), diisobutyl adipate), citric acid (such as tributyl citrate, acetyl tributyl citrate), glutaric acid, succinic acid (such as dibasic esters: a mixture of methyl esters of adipic, glutaric and succinic acids), or sebecic acid (such as n-octyl sebecate).

Examples of aromatic dicarboxylic acid esters include the phthalates (such as dimethyl phthalate, diethyl phthalate, dibutyl phthalate or diisononyl phthalate).

Beside using one ester as a solvent it is also preferred to use two or more.

It may be advantageous, especially when the active substance is not very soluble in the ester-solvent, to incorporate one or more polar co-solvents.

Polar co-solvents, as used herein, means co-solvents which are totally or partially soluble in water (e.g. from 0.1 up to 100 %) . The co-solvent is generally selected with a view to low toxicity and a low potential as irritant for skin and eyes.

Examples of polar co-solvents are ketones (such as cyclohexanone, acetophenone, methyl n-amyl ketone or 2-heptanone), alcohols (such as benzyl alcohol), alkyl amides (such as n,n-dimethylacetamide), alkylpyrrolidones (such as n-methylpyrrolidone, n-octylpyrrolidone, n-dodecylpyrrolidone or n-hydroxy 2-ethylpyrrolidone), dialkylsulfoxides (such as dimethylsulfoxide), ethers (such as anisole and 1-methoxy-2-propanol) or derivatives of urea (such as dimethylpropylene urea).

Preferred polar co-solvents are cyclohexanone (solubility in water: 8 % at room temperature), 2-heptanone, benzyl alcohol (solubility in water: 4 % at room temperature), n,n-dimethylacetamide (solubility in water: soluble, no data), n-methylpyrrolidone (solubility in water 100 % at room temperature), dimethylsulfoxide (solubility in water: 100 % at room temperature) and 1-methoxy 2-propanol (solubility in water: 100 % at room temperature), especially in combination with deltamethrin as active substance.

The polar co-solvent content in generally 1 to 25 % by weight, preferably 2 to 20 % by weight, in particular 8 to 20 % by weight The content of the co-solvent will generally be chosen as low as possible but high enough to increase the solubility of the active substance to obtain the targeted loading of the active substance in the finished product and to avoid crystallization during the dilution before application.

In a preferred embodiment the formulation according to the invention does not comprise any further solvent apart from the ester compound(s) as main solvent and the optional polar co-solvent, i. e. that the solvent part of the formulation consists essentially of the ester component and optionally one or more polar co-solvents.

The formulations further comprise an emulsifier system comprising one or more anionic emulsifiers and two or more non ionic emulsifiers.

Examples of anionic emulsifiers are phosphate esters and sulfate esters of poly (preferably 2 to 30) ethoxylated (preferably C₆ to C₂₂) fatty alcohols such as ethoxylated (2 EO (EO means an ethylene oxyde unit) oleyl alcohol phosphate ester (e.g. Empiphos® O3D, Albright & Wilson, UK), ethoxylated oleyl alcohol phosphate esters (e.g. Crodafos® N serie, Croda Oleochemicals, UK), ethoxylated (2-10 EO) ceto/stearyl alcohol phosphate esters (e.g. Crodafos® CS serie, Croda Oleochemicals, UK), ethoxylated (4-6 EO) tridecyl alcohol phosphate esters (e.g.Emphos® PS serie, CK Witco, USA), ethoxylated fatty alcohol phosphate esters (e.g. Crafol® AP serie, Henkel Iberica, Spain), ethoxylated (3-6 EO) fatty alcohol phosphate esters (e.g. Rhodafac® serie, Rhodia Chimie, France), free acids of complex organic phosphate esters (e.g. Beycostat® serie, Ceca S.A., France), phosphate esters of polyethoxylated (8 to 25 EO) arylphenols (such as polyethoxylated di- and tristyrylphenols) (e.g. Soprophor 3D33, Rhodia Chimie, France), sulfate esters of polyethoxylated arylphenols (such as polyethoxylated di- and tristyrylphenols) (e.g. Soprophor DSS/7, Soprophor 4D384, Rhodia Chimie, France), inorganic salts of alkylbenzenesulfonate (such as calcium dodecylbenzenesulfonate) or inorganic salts of polycarboxlic acids, such as sodium and potassium salts are preferred.

Non ionic emulsifiers are generally from the class of polyethoxylated alkylphenols. Examples of suitable non ionic emulsifiers are polyethoxylated (30 to 40 EO) castor oils, polyethoxylated (6 to 20 EO) fatty (C₈ to C₂₂) alcohols, polyethoxylated (8 to 25 EO) arylphenols (such as polyethoxylated di- and tristyrylphenols), tridecyl alcohol polyglycol ethers (such as ethoxylated (6 EO) tridecyl alcohol: Genapol® X-060, Clariant, Germany) polyalkoxylated alkyl ethers (such as polyalkoxylated butyl ether Witconol® NS 500 K, CK Witco, USA), ethylene oxide propylene oxide block copolymers (molecular weight ranging from 4,000 to 20,000 preferably ranging from 6,500 to 15,000).

A combination is generally used of an anionic emulsifier with a combination of two or more, preferably two, non ionic emulsifiers where one non ionic emulsifier has a HLB ranging from 4 to 12, preferably 8 to 12, one non ionic emulsifier has a HLB ranging from 12 to 20, preferably 14 to 18. This will ensure a particularly good physicochemical behaviour of the EW formulation at high and low temperatures.

The HLB (Hydrophile-Lipophile-Balance) is an empirical scale defined by W.C. Griffin (J. Soc. Cosmetic Chemists, 1, 311 (1949)) which expresses the amphiphilic nature of emulsifying agents (particularly non ionic surfactants). The least hydrophilic surfactants are assigned the lowest HLB values.

The formulation generally comprises 0.01 to 20 % by weight, preferably 0.1 to 10 % by weight of a combination of anionic and non ionic emulsifiers, more preferably a combination of 0.01 to 10 % by weight, more particularly 0.1 to 3 % by weight of an anionic emulsifier and 0.01 to 15 % by weight, more particularly 0.1 to 7 % by weight of two ore more non ionic emulsifiers.

The formulation further comprises one or more filmforming agent/thickener. Examples of suitable film-forming agents/thickeners are thermoplastic resins such as polyvinyl pyrrolidones (such as ® Luviskol K 90 characterized by a K index between 88 and 96 which refers to the viscosity of an aqueous solution containing 1 % w/w of the polyvinyl pyrrolidone grade, BASF AG, Germany), or polyvinyl alcohols obtained by partial hydrolysis of polyvinyl acetates (such as Mowiol products characterised by the viscosity of an aqueous solution containing 4 % w/w of the Mowiol grade, Clariant, Germany), or vinylpyrrolidone/vinyl acetate copolymers (e.g. Agrimer VA 6, which is 60 % vinylpyrrolidone, ISP, USA).

The use of adequate emulsifiers combined with film forming agents/thickeners is a particularly advantageous way to ensure a good stability of the formulation.

Film-forming agents/thickeners are generally added in an amount of 0.1 to 5.0 % by weight, particularly 0.5 to 3.0 % by weight.

The formulation generally comprises 5 to 99% by weight, preferably 10 to 85 % by weight, more preferably 45 to 65 % by weight, of water.

The formulation optionally comprises further additives or auxiliaries, preferably antifreeze agents, stabilizing agents, antifoams and defoamers, preservatives, colouring agents and/or odour masking products.

Examples of suitable antifreeze agents are ethylene glycol, monopropylene glycol, glycerol, hexylene glycol, 1-methoxy-2-propanol, cyclohexanol, in particular monopropylene glycol.

They are optionally added in an amount of preferably 1 to 30 % by weight, particularly 5 to 15 % by weight.

Stabilizing agents which are optionally added in the formulation are acids, preferably organic acids, such as dodecylbenzene sulfonic acid, acetic acid, propionic acid or citric acid, in particular citric acid and antioxidants, such as butyl hydroxy toluene (BHT), butyl hydroxy anisole (BHA), in particular butyl hydroxy toluene.

The stabilizing agent is optionally added in an amount of generally 0.01 to 2 % by weight, particularly 0.1 to 1 % by weight.

Preferred antifoams and defoamers are based on silicone, particularly preferred are an aqueous emulsion of dialkylpolysiloxanes commercially available as Rhodorsil® 426R from Rhodia Chimie France, Wacker SE serie from Wacker, Germany and a mixture of dialkylpolysiloxanes as an oil, commercially available as Rhodorsil® 416 from Rhodia Chimie France, Wacker S184 or Wacker SL from Wacker, Germany.

Antifoams/defoamers are optionally added in an amount of generally 0.01 to 2 % by weight, preferably 0.1 to 1.5 % by weight.

Customary preservatives are optionally added such as, inter alia, derivatives of benzoic acid, sorbic acid, formaldehyde, in particular a combination of methyl parahydroybenzoate (such as Preserval® M (Laserson & Sabetay, France)) and propyl parahydroxybenzoate (such as Preserval® P (Laserson & Sabetay, France)), generally in an amount of 0.1 to 1.0 % by weight, particularly 0.2 to 0.5 % by weight.

Further preferred optional additives are colouring agents such as Vitasyn® Patentblau (Clariant, Germany) and odour masking products such as a mixture of numerous natural and synthesis perfumes, such as Perfume® TM 4242 (Technicoflor, France).

They are optionally added in amounts of generally 0.01 to 1 % by weight, particularly 0.1 to 0.5 % by weight of colouring agent and 0.02 to 2 % by weight, particularly 0.1 to 1 % by weight of odour masking products.

In a further aspect of the invention there is provided a process for the manufacture of the insecticide, in particular pyrethroid, oil-in-water (EW) emulsion described above, which comprises a three-step process:
- A Preparation of the organic phase comprising the dissolution of the insecticide, in particular pyrethroid, active substance(s) in one or several organic solvents and, optionally, the polar co-solvent(s), and further addition of the emulsifiers and optionally a stabilizing agent and/or a preservative using preferably a mixer, such as a paddle agitator.
   Optionally, a warming up (up to 30°C) step is included in order to make the solubilization of the hydrophilic emulsifier easier.
- B preparation of the aqueous phase comprising the mixing of water with an optional antifreeze agent using for example a rotor-stator Ultra-Dispersor (low speed) followed by the incorporation of a film-forming agent/thickener. It is advantageous to sprinkle the polymeric powder (film forming agent) over the aqueous phase to control the formation of lumps.
   The following optional ingredients can be incorporated in the above-mentioned liquid phase at room temperature using a mixer, such as a paddle agitator:
   - colouring agent and
   - odour masking products
   - defoaming agents
   The mixing operation is maintained until a homogeneous aqueous phase is obtained.
- C/ The third step comprises preparing the finished pyrethroid insecticide oil-in-water (EW) emulsion by dispersing water or the aqueous phase obtained in step B/ in the organic phase obtained in A/ at preferably room temperature and under high shear using e.g. a high shear mixer, such as a rotor stator mixer available from companies such as Silverson (UK) and IKA (Germany). The two phases are preferably first put together without any stirring. This mixture is then strongly subjected to high shearing effects (T = 35°C max).

Insecticide, in particular pyrethroid, oil-in-water (EW) emulsion obtainable by said process preferably show the following characteristics:
- the viscosity value of the EW formulation according to the invention is in the range of 50-150 mPas using a Brookfield apparatus equipped with a LV2 module rotating at 30 and 60 rpm. The measurement is carried out at a temperature of 25 ± 5°C;
- the blooming or spontaneity of the formulation when further diluted in water (by mixing from 0.01 to 5 % w/v of the formulation with water in a cylinder of 100 ml capacity) is outstanding as a result of the low viscosity;
- the droplet size distribution characterized by a mean diameter ranging from 0.3 to 0.8 microns and 80 % of the total population below 1 micron as measured using a laser particle size analyzer such as equipments commercialized by Cilas and Malvern companies.

The EW formulation(s) according to the invention are preferably stable for at least 2 weeks at 54°C, 6 weeks at 50°C and -10°C and at least two years under room temperature conditions.

The invention also relates to a method of controlling pests, such as harmful arthropods, like harmful insects and acarians, which comprises applying an effective amount of the above-mentioned insecticide, in particular pyrethroid, oil-in-water (EW) composition, preferably in the form of an aqueous dilution, to these pests or to the plants, soils, surfaces, and the like infested with them, and to the use of the insecticide, in particular pyrethroid, oil-in-water (EW) formulation in crop protection, further pest control uses, such as vector control, household uses, pet environments, etc and in veterinary applications.

The compositions according to the invention are simply applied by diluting the oil-in-water (EW) emulsions with the desired amount of water, stirring the mixture briefly and applying it to the plants, soils, surfaces and the like.

The invention is further illustrated by the examples, which are compiled in Table 1, without limiting the invention thereto.

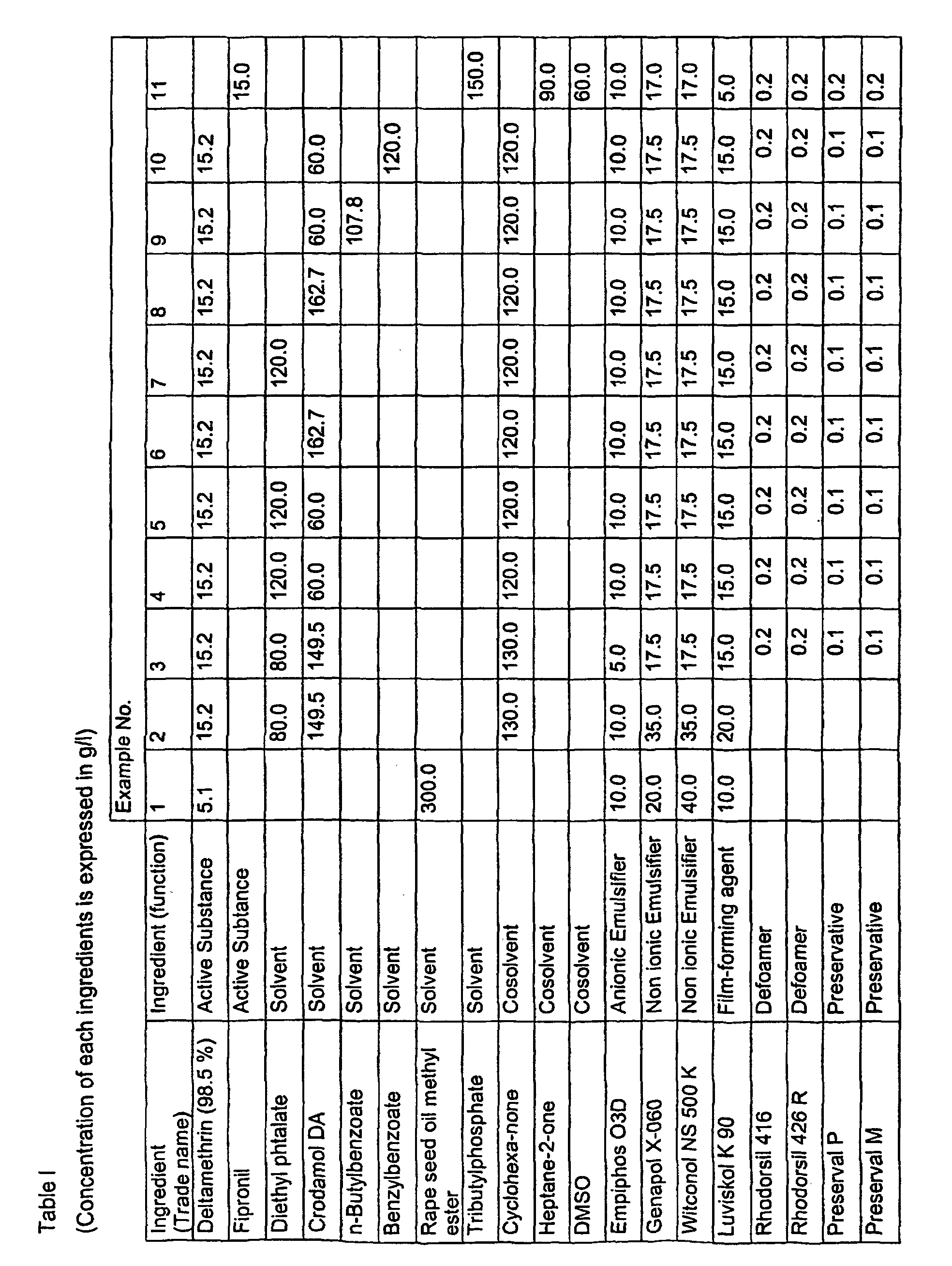

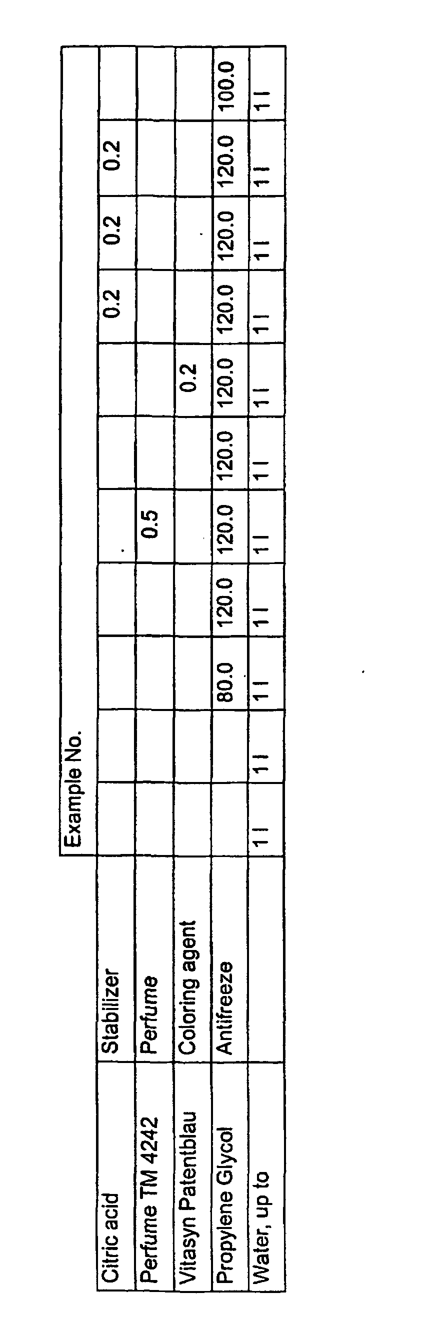

## Claims

1. An oil-in-water emulsion formulation, comprising
a) one or more insecticides, in particular pyrethroids;
b) one or more solvents from the group of esters of aliphatic monocarboxylic acids, esters of aliphatic dicarboxylic acids, esters of aromatic monocarboxylic acids esters of aromatic dicarboxylic acids and tri-n-alkylphosphates;
c) an emulsifier system comprising one or more anionic surfactants and two or more non ionic surfactants, one of which has a HLB value between 4 and 12 and one of which has a HLB value between 12 and 20;
d) one or more film forming agents/thickeners; and
e) water.

2. The formulation as claimed in claim 1, wherein the insecticide is a pyrethroid.

3. The formulation as claimed in claim 2, wherein the pyrethroid is deltamethrin.

4. The formulation as claimed in any of the preceding claims, comprising a polar cosolvent.

5. The formulation as claimed in any of the preceding claims comprising further additives and/or auxiliaries from the groups of, antifreeze agents, stabilizing agents, antifoams/defoamers, preservatives, colouring agents and odor masking products.

6. The formulation as claimed in any of the preceding claims comprising 0.05 to 200 g/l of the active ingredient(s).

7. A process for producing an oil-in-water emulsion formulation as claimed in any of claim 1 to 6, comprising the steps of
A. the preparation of an organic phase containing the insecticide(s), the emulsifier system and optionally further auxiliaries in the organic solvent(s) and optionally a polar co-solvent;
B. the preparation of an aqueous phase containing water, the film forming agent/thickener and further hydrophilic auxiliaries; and
C. the mixing of the organic phase and the aqueous phase under high shear to obtain the oil-in-water emulsion.

8. The process as claimed in claim 7, wherein the insecticide is a pyrethroid.

9. The process as claimed in claim 8, wherein the pyrethroid is deltamethrin.

10. The use of an oil-in-water emulsion formulation as claimed in any of claims 1 to 6 for pest control.

11. The use as claimed in claim 10, wherein the insecticide is a pyrethroid.

12. The use as claimed in claim 11, wherein the pyrethroid is deltamethrin.

13. A method of controlling pests comprising applying an aqueous dilution of an oil-in-water emulsion formulation as claimed in claim 1 to the pests or to plants or other locuses infected with or frequented by the pests.

14. The method as claimed in claim 13, wherein the insecticide is a pyrethroid.

15. The method as claimed in claim 14, wherein the pyrethroid is deltamethrin.

## Patentansprüche

1. Öl-in-Wasser-Emulsionsformulierung, umfassend
a) ein oder mehrere Insektizide, insbesondere Pyrethroide;
b) ein oder mehrere Lösungsmittel aus der Gruppe von Estern von aliphatischen Monocarbonsäuren, Estern von aliphatischen Dicarbonsäuren, Estern von aromatischen Monocarbonsäuren, Estern von aromatischen Dicarbonsäuren und Tri-n-alkylphosphaten;
c) ein Emulgatorsystem, das ein oder mehrere anionische grenzflächenaktive Mittel und zwei oder mehrere nichtionische grenzflächenaktive Mittel umfaßt, von denen eines einen HLB-Wert zwischen 4 und 12 und eines einen HLB-Wert zwischen 12 und 20 aufweist;
d) einen oder mehrere Filmbildner/Verdicker; und
e) Wasser.

2. Formulierung nach Anspruch 1, worin das Insektizid ein Pyrethroid ist.

3. Formulierung nach Anspruch 2, worin das Pyrethroid Deltamethrin ist.

4. Formulierung nach einem der vorstehenden Ansprüche, umfassend ein polares Co-Lösungsmittel.

5. Formulierung nach einem der vorstehenden Ansprüche, umfassend weitere Additive und/oder Hilfsmittel aus den Gruppen von Gefrierschutzmitteln, stabilisierenden Mitteln, Antischaummitteln/Entschäumern, Konservierungsmitteln, Färbemitteln und Geruchsüberdeckungsprodukten.

6. Formulierung nach einem der vorstehenden Ansprüche, umfassend 0,05 bis 200 g/l an dem (den) wirksamen Bestandteil(en).

7. Verfahren zur Herstellung einer Öl-in-Wasser-Emulsionsformulierung nach einem der Ansprüche 1 bis 6, umfassend die Schritte
A. Ausbilden einer organischen Phase, die das (die) Insektizid(e), das Emulgatorsystem und gegebenenfalls weitere Hilfsstoffe in dem (den) organischen Lösungsmittel(n) und gegebenenfalls ein polares Co-Lösungsmittel enthält;
B. Ausbilden einer wässerigen Phase, die Wasser, Filmbildner/Verdicker und weitere hydrophile Hilfsmittel enthält; und
C. Mischen der organischen Phase und der wässerigen Phase unter hoher Scherung zur Ausbildung der Öl-in-Wasser-Emulsion.

8. Verfahren nach Anspruch 7, worin das Insektizid ein Pyrethroid ist.

9. Verfahren nach Anspruch 8, worin das Pyrethroid Deltamethrin ist.

10. Verwendung einer Öl-in-Wasser-Emulsionsformulierung nach einem der Ansprüche 1 bis 6 zur Schädlingsbekämpfung.

11. Verwendung nach Anspruch 10, worin das Insektizid ein Pyrethroid ist.

12. Verwendung nach Anspruch 11, worin das Pyrethroid Deltamethrin ist.

13. Verfahren zur Bekämpfung von Schädlingen, umfassend das Aufbringen einer wässerigen Verdünnung einer Öl-in-Wasser-Emulsionsformulierung nach Anspruch 1 auf die Schädlinge oder auf Pflanzen oder andere Stellen, die mit den Schädlingen infiziert sind oder von den Schädlingen frequentiert werden.

14. Verfahren nach Anspruch 13, worin das Insektizid ein Pyrethroid ist.

15. Verfahren nach Anspruch 14, worin das Pyrethroid Deltamethrin ist.

## Revendications

1. Formulation d'émulsion huile dans l'eau, comprenant
a) un ou plusieurs insecticides, en particulier les pyréthrinoïdes ;
b) un ou plusieurs solvants choisis dans le groupe constitué par les esters d'acides monocarboxyliques aliphatiques, les esters d'acides dicarboxyliques aliphatiques, les esters d'acides monocarboxyliques aromatiques, les esters d'acides dicarboxyliques aromatiques et les tri-n-alkylphosphates ;
c) un système émulsifiant comprenant un ou plusieurs tensioactifs anioniques et deux ou plus tensioactifs non ioniques, dont un présente une valeur HLB comprise entre 4 et 12 et dont un présente une valeur HLB comprise entre 12 et 20 ;
d) un ou plusieurs agents filmogènes/épaississants ; et
e) de l'eau.

2. Formulation selon la revendication 1, dans laquelle l'insecticide est un pyréthrinoïde.

3. Formulation selon la revendication 2, dans laquelle le pyréthrinoïde est la deltaméthrine.

4. Formulation selon l'une quelconque des revendications précédentes, comprenant un cosolvant polaire.

5. Formulation selon l'une quelconque des revendications précédentes, comprenant d'autres additifs et/ou adjuvants choisis dans le groupe constitué par les produits antigels, les agents stabilisants, les agents antimousses, les conservateurs, les agents colorants et les produits désodorisants.

6. Formulation selon l'une quelconque des revendications précédentes, comprenant de 0,05 à 200 g/l du ou des ingrédients actifs.

7. Procédé de fabrication d'une formulation d'émulsion huile dans l'eau selon l'une quelconque des revendications 1 à 6, comprenant les étapes de
A. préparation d'une phase organique contenant le ou les insecticides, le système émulsifiant et éventuellement d'autres adjuvants dans le ou les solvants organiques et éventuellement un cosolvant polaire ;
B. préparation d'une phase aqueuse contenant de l'eau, l'agent filmogène/épaississant et d'autres adjuvants hydrophiles ; et
C. mélange de la phase organique et de la phase aqueuse sous un fort cisaillement afin d'obtenir l'émulsion huile dans l'eau.

8. Procédé selon la revendication 7, dans lequel l'insecticide est un pyréthrinoïde.

9. Procédé selon la revendication 8, dans lequel le pyréthrinoïde est la deltaméthrine.

10. Utilisation d'une formulation d'émulsion huile dans l'eau selon l'une quelconque des revendications 1 à 6, pour la lutte contre les insectes nuisibles.

11. Utilisation selon la revendication 10, dans laquelle l'insecticide est un pyréthrinoïde.

12. Utilisation selon la revendication 11, dans laquelle le pyréthrinoïde est la deltaméthrine.

13. Procédé de lutte contre les insectes nuisibles comprenant l'application d'une dilution aqueuse d'une formulation d'émulsion huile dans l'eau selon la revendication 1 aux insectes ou aux plantes ou à d'autres cites infestés avec, ou fréquentés par, les insectes nuisibles.

14. Procédé selon la revendication 13, dans lequel l'insecticide est un pyréthrinoïde.

15. Procédé selon la revendication 14, dans lequel le pyréthrinoïde est la deltaméthrine.
